# EUROPÄISCHE PATENTSCHRIFT

(11) **EP 2 616 212 B1**
(45) Veröffentlichungstag und Bekanntmachung des Hinweises auf die Patenterteilung: **04.05.2016**
(21) Anmeldenummer: 11817307.9
(22) Anmeldetag: 15.09.2011
(51) Int. Cl.: B23Q 1/00

(54) **SICHERUNGS-SPANNVORRICHTUNG**
SAFETY CLAMPING DEVICE
DISPOSITIF DE FIXATION ET DE SERRAGE

(30) Priorität: 15.09.2010 DE 102010037546
(43) Veröffentlichungstag der Anmeldung: 24.07.2013
(73) Patentinhaber: ZeroClamp GmbH, 82057 Icking (DE)
(72) Erfinder: HOFMANN, Klaus, 85567 Bruck (DE)
(74) Vertreter: Mischung, Ralf
(86) Internationale Anmeldenummer: PCT/DE2011/075224
(87) Internationale Veröffentlichungsnummer: WO 2012/052010

(56) Entgegenhaltungen:
- EP-A1- 1 344 599
- DE-A1- 10 249 241
- US-A1- 2009 206 225

## Beschreibung

Die vorliegende Erfindung betrifft eine Sicherungs-Spannvorrichtung zur Sicherung von Werkstücken während der Bearbeitung auf einer Werkzeugmaschine.

Für die Befestigung von Werkstücken, die durch eine Werkzeugmaschine bearbeitet werden sollen, sind unterschiedliche Mechanismen bekannt. Die Befestigung kann dabei insbesondere erfolgen mittels am Werkstück befestigter Einspannkomponenten, die ihrerseits in an der Werkzeugmaschine vorgesehene Einspannmittel (nachfolgend auch als Spanntopf bezeichnet) eingespannt werden können. Als Einspannkomponenten kommen insbesondere Spannbolzen in Frage, die bspw. temporär mit dem bzw. in das Werkstück verschraubt werden. Derartige Systeme haben den Vorteil, dass das temporär aus der Maschine entfernte Werkstück mit hoher Wiederhol- bzw. Lagegenauigkeit in der Werkzeugmaschine eingespannt werden kann, ohne dass zusätzliche Justierarbeiten erforderlich wären.

Aus der DE 10 2005 033 468 A1 bzw. aus der WO 2007/009439 ist ein solches Spannsystem bekannt.

Insbesondere bei während der Bearbeitung bewegten Werkstücken muss darauf geachtet werden, dass diese sich nicht ungewollt aus Ihrer Befestigung lösen bzw. dass in einem solchen Fall unverzüglich und vorzugsweise automatisch Maßnahmen ergriffen werden, um die Maschine schnellstmöglich in einen sicheren Zustand zu überführen.

Zugleich ist aus dem Stand der Technik das Problem bekannt, dass die oftmals schwergewichtigen Werkstücke vor der Befestigung bzw. Verspannung an der Maschine ausreichend genau positioniert werden müssen, um die Fixierung (insbesondere mit der vorgenannten Spanntopf-Technik) überhaupt durchführen zu können. Besonders schwierig ist dies in den Fällen, in denen das Werkstück auf einer vertikal ausgerichteten Grundplatte zu befestigen ist. Als Beispiel kommt etwa eine Drehbearbeitung in Frage, bei der das Werkstück an einer vertikal ausgerichteten Grundplatte temporär zu fixieren ist, wobei die Grundplatte einen oder mehrere Spanntöpfe aufweist und um eine horizontale Achse gedreht werden soll. Das Werkstück ist dafür mit den an ihm befestigen Spannbolzen so an der Grundplatte anzuordnen, dass die Spannbolzen in die Spanntöpfe der Grundplatte hineinragen, um durch anschließende Betätigung des Spannmechanismus der Spanntöpfe die Fixierung des Werkstücks mit der Grundplatte bzw. der Werkzeugmaschine lagegenau zu erreichen. Diese Vorpositionierung vor der Fixierung durch die Spanntöpfe ist bei schweren oder sperrigen Werkstücken mitunter schwierig und rein manuell oft nicht zu bewerkstelligen.

US-2009/0206225 offenkart eine Spannvorrichtung nach dem Oberbegriff des Anspruchs 1.

Aufgabe der Erfindung ist es, die Vorpositionierung des Werkstücks zu erleichtern und gleichzeitig die Sicherheit gegen ungewolltes Loslösen des Werkstücks zu erhöhen.

Die Aufgabe wird gelöst durch eine Sicherungs-Spannvorrichtung nach Anspruch 1.

Die Erfindung geht von der Erkenntnis aus, dass die Vorpositionierung des Werkstücks vor der eigentlichen, mit den Spanntöpfen bewirkten Fixierung vorteilhaft erleichtert wird durch einen Positioniermechanismus, der das Werkstück vor dieser positionsgenauen Fixierung zunächst in seiner Bewegungsfreiheit auf ein konstruktiv vorgebbares Maß limitiert. Dadurch kann das Werkstück relativ zu einer der Fixierung dienenden Grundplatte zunächst grob vorpositioniert und in dieser Lage belassen werden, ohne dass das Werkstück manuell oder durch sonstige externe Hilfsmittel gehalten werden müsste. Ein solcher Mechanismus erleichtert die Anordnung und Befestigung des Werkstücks an der Werkzeugmaschine, da der Bediener lediglich die grobe Vorpositionierung sicherzustellen hat, wonach das Werkstück ohne externe Hilfsmittel in seine endgültige fixierte Lage (im folgenden "Fixierlage") an der Grundplatte überführt werden kann, wie noch zu sehen sein wird.

Zur Vorpositionierung können bewegliche Mittel vorgesehen sein, welche eine Ausnehmung im Werkstück oder in einer das Werkstück tragenden Halterung hintergreifen, um das Werkstück dadurch mit einer Zugkraft beaufschlagen zu können, vorzugsweise in Richtung auf die Grundplatte bzw. die Spanntöpfe.

Eine Ausführungsform der erfindungsgemäßen Sicherungs-Spannvorrichtung umfasst daher wenigstens einen Spanntopf, wie er aus dem vorgenannten Stand der Technik bereits bekannt ist, der beispielsweise in eine vertikal angeordnete Grundplatte eingebaut ist. Der Spanntopf weist eine Einzugsöffnung zur Aufnahme eines mit dem Werkstück verbundenen Fixierelements auf, wobei es sich bei diesem Fixierelement insbesondere um einen ebenfalls aus dem Stand der Technik bekannten Spannbolzen handeln kann. Die Einzugsöffnung erstreckt sich längs einer ersten, vorzugsweise horizontalen Richtung X, wobei der am Werkstück befestigte zugehörige Spannbolzen entsprechend in X-Richtung in die Einzugsöffnung einzuführen ist, um dort fixiert zu werden.

Weiterhin umfasst die erfindungsgemäße Sicherungs-Spannvorrichtung wenigstens einen Positioniermechanismus. Der Positioniermechanismus ist mit beweglichen Mitteln ausgerüstet, um das Werkstück, bevor es durch den Spanntopf positionsgenau fixiert wird, zunächst in seiner Bewegungsfreiheit in X-Richtung und/oder quer dazu einzuschränken. Außerdem kann der Positioniermechanismus das Werkstück in die Fixierlage bewegen bzw. dort halten, selbst wenn die Spanntöpfe die in sie hineinragende Spannbolzen gewollt oder unbeabsichtigt freigeben.

Die beweglichen Mittel des Positioniermechanismus können sich insbesondere in X-Richtung von der Grundplatte um ein Maß hervorerstrecken und in eine geeignete Ausnehmung des Werkstücks eingreifen. Durch den Eingriff wird eine Relativbewegung des Werkstücks quer zu den beweglichen Mitteln, also quer zur X-Richtung, formschlüssig verhindert, so dass das Werkstück in dieser Vorposition mit Hilfe des Positioniermechanismus gehalten werden kann.

Die Erfindung sieht vor, dass die Mittel des Positioniermechanismus in X-Richtung bewegbar sind, um das von den Mitteln beaufschlagte Werkstück relativ zum Spanntopf aktiv auf diesen hin zu bewegen. Das bedeutet, dass die Mittel aktiv an dem Werkstück angreifen können, um es in Richtung auf den Spanntopf in die Fixierlage zu ziehen, so dass der am Werkstück angeordnete Spannbolzen bis in den Spanntopf der Grundplatte hineingezogen wird. Durch geeignete Zentriermittel an dem Spanntopf und/oder dem Positioniermechanismus erfährt das Werkstück dabei die zur Fixierung vorgesehene genaue Ausrichtung bzw. Positionierung. Bei Betätigung des Spanntopfes wird der in den Spanntopf hineinragende Spannbolzen in X-Richtung und quer dazu lagegenau fixiert, so dass das Werkstück für die Bearbeitung an der Werkzeugmaschine in diese Fixierlage befestigt ist.

Damit die beweglichen Mittel des Positioniermechanismus das Werkstück in die Fixierlage ziehen bzw. dort halten können, umfassen sie wenigstens ein Zugelement, das aus einer ersten Lage L₁, in der das Werkstück in X-Richtung frei beweglich ist, in eine zweite Lage L₂ verfahrbar ist, in der die Bewegungsfreiheit des Werkstücks in X-Richtung auf ein vorgebbares Maß limitiert ist (insbesondere auf den Wert Null, bei dem das Werkstück dann die Fixierlage erreicht ist). Das Zugelement erstreckt sich dabei in X-Richtung und weist an seinem freien Ende einen quer dazu verlaufenden Vorsprung (Haken) auf, der in eine in der Ausnehmung des Werkstücks vorgesehene Hinterschneidung eingreifen kann, um das Werkstück in X-Richtung mit einer Zugkraft beaufschlagen zu können.

Eine vorteilhafte Ausführung sieht dabei vor, dass das wenigstens eine Zugelement - während es in Richtung auf den Spanntopf zu bewegt wird - wenigstens abschnittsweise auch quer zur X-Richtung geführt wird. Dadurch wird sichergestellt, dass das Zugelement bei seiner Zugbewegung die Hinterschneidung in der Ausnehmung das Werkstücks hintergreift. Aus der Figurenbeschreibung wird deutlich werden, dass dazu insbesondere mehrere, zu einer Zylinderform zusammengesetzt angeordnete Zugelemente geeignet sind, deren freies Ende jeweils mit einem radial nach außen ragenden, hakenartigen Vorsprung versehen ist. Jeder Vorsprung bewegt sich Rahmen der Zugbewegung teilweise um ein Maß radial nach außen, um dabei mit dem Haken die Ausnehmung im Werkstück zu hintergreifen. Bei gleichzeitiger Bewegung der Zugelemente in X-Richtung wird dann das durch die Zugelemente beaufschlagte Werkstück in Richtung auf die Fixierlage so weit zu bewegt, bis die am Werkstück befestigten Spannbolzen ausreichend weit in den jeweiligen Spanntopf hineinragen, um dort eingespannt bzw. fixiert zu werden.

Eine erfindungsgemäße Ausführungsform der Erfindung sieht eine Öffnung am Positioniermechanismus vor, die als Mündung fungiert für ein Fluid (vorzugsweise Druckluft). Die Öffnung ist erfindungsgemäß so angeordnet, dass sie durch ein Werkstück oder ein mir den beweglichen Mitteln gekoppeltes Verschlusselement verdeckt bzw. geschlossen wird, wenn das Werkstück die Fixierlage eingenommen hat, und dabei mittels seiner Spannbolzen in den jeweiligen Spanntöpfen fixiert sein kann, aber nicht muss.

Die Öffnung kann vorteilhaft dazu verwendet werden, das Ausströmen des Fluids zu überwachen und daraus Rückschlüsse zu ziehen, ob das Werkstück durch den Positioniermechanismus noch sicher in der Fixierlage gehalten wird. Dann wird die Öffnung vom Werkstück oder einem mit diesem direkt oder indirekt zusammenwirkenden Element verschlossen und das Fluid strömt nicht aus. Falls sich aber das Werkstück möglicherweise unerwünscht gegenüber dem Positioniermechanismus lösen könnte oder gar gelöst hat, wird die Öffnung vom Werkstück, Zugelement, Betätigungsstift o.ä. nicht mehr verschlossen und das Fluid kann ausströmen. Erfindungsgemäß kann die Überwachung der Strömungsverhältnisse dazu genutzt werden, die Werkzeugmaschine für den Betrieb freizugeben bzw. dann in einen sicheren Betriebszustand zu überführen, wenn eine Strömung des Fluids festgestellt wird, was auf ein unerwünschtes Loslösen des Werkstücks hindeutet.

Die Überwachung auf eine Fluidströmung kann durch unterschiedliche, dem Fachmann an sich bekannte Sensoren bzw. Steuerungen erfolgen. Eine einfache Variante sieht vor, innerhalb der Zuleitung des Fluids eine Drossel vorzusehen und die Druckverhältnisse stromaufwärts und stromabwärts der Drossel durch geeignete Drucksensoren laufend zu überwachen. Sofern das Werkstück sicher in der Fixierlage gehalten wird, also die Öffnung verschlossen ist und demzufolge kein Fluid ausströmen kann, werden die Drücke auf beiden Seiten der Drossel etwa gleich groß sein. Ergibt sich dagegen aufgrund eines ungewollt losgelösten Werkstücks oder bewegten Zugelements eine Strömung, so lässt sich über die Drucksensoren stromaufwärts und stromabwärts der Drossel ein Druckgefälle messen. Eine geeignete Auswerteeinheit kann daraus ein Steuersignal zur sofortigen Abschaltung der Werkzeugmaschine generieren und damit verhindern, dass die Maschine oder gar ein Mensch durch das losgelöste und eventuell unkontrolliert fortgeschleuderte Werkstück zu Schaden kommt.

In Weiterführung dieses erfindungsgemäßen Gedankens sieht eine andere Ausführungsform der Erfindung vor, dass auch am Spanntopf eine Öffnung vorgesehen ist, an der eine Zuführung für ein Fluid mündet. Auch diese Öffnung soll durch das Werkstück oder ein daran gekoppeltes Verschlusselement verschließbar sein. Insbesondere soll die Öffnung dann verschlossen sein, wenn das Werkstück mit dem oder den Spannbolzen in dem oder den Spanntöpfen fixiert ist. Löst sich dagegen das Werkstück aus dem mit der Öffnung versehenen Spanntopf heraus, so kann auch hier - analog zum Positioniermechanismus - das Fluid ausströmen. In gleicher Weise wie für den Positioniermechanismus kann die Strömung auch für den Spanntopf überwacht und gegebenenfalls zu einer Abschaltung der Werkzeugmaschine führen, wenn das unbeabsichtigte Lösen des Werkstücks das Fluid aus der Öffnung am Spanntopf ausströmen lässt.

Eine besonders einfache und zweckmäßige Sicherungsfunktion ergibt sich dadurch, dass die beiden Zuführungen zum Spanntopf bzw. zum Positioniermechanismus miteinander kommunizieren, also insbesondere gleichzeitig mit einem Fluid beaufschlagt werden können. Auf diese Weise lassen sich die beiden Fluidstränge gleichzeitig überwachen, so dass die Abschaltung der Werkzeugmaschine ausgelöst werden kann, wenn entweder die Öffnung am Spanntopf und/oder diejenige am Positioniermechanismus freigegeben wird und eine Strömung des Fluids verursacht.

Eine erfindungsgemäße Ausführungsform der Erfindung sieht dazu vor, dass in Fortführung der vorbeschriebenen Anordnung der Drossel und der Drucksensoren die Zuleitung stromabwärts der Drossel aufgeteilt wird in eine Leitung bzw. Zuführung, die zum Spanntopf führt, während die zweite Leitung bzw. Zuführung zum Positioniermechanismus hinführt. Wenn jede der beiden Zuführungen an ihrem Ende, also im Bereich der Öffnung am Spanntopf bzw. am Positioniermechanismus, verschlossen ist, so tritt keine Strömung auf und die Werkzeugmaschine kann betrieben werden. Tritt dagegen in wenigstens einem der beiden Zuführungen stromabwärts der gemeinsamen Drossel eine Strömung auf, so wird die vorbeschriebene Anordnung der Drucksensoren einen Druckabfall erkennen, dessen Auswertung zur Abschaltung der Werkzeugmaschine herangezogen werden kann. Eine solche Anordnung der Zuführungen zum Spanntopf und zum Positioniermechanismus, bei der beide Zuführungen aus einer gemeinsamen, eine Drucküberwachung aufweisenden Zuleitung abgezweigt werden, lässt sich konstruktiv einfach realisieren und erhöht besonders vorteilhaft die Sicherheit gegen unbeabsichtigtes Loslösen eines Werkstücks.

Eine Ausführungsform der erfindungsgemäßen Sicherungs-Spannvorrichtung soll nachfolgend anhand einer Figurenbeschreibung näher erläutert werden.

Von den Figuren zeigen
- Fig. 1: eine perspektivische Ansicht einer Grundplatte mit Spanntöpfen und Positioniermechanismen,
- Fig. 2: eine Schnittdarstellung eines Positioniermechanismus mit nicht herangezogenem Werkstück und
- Fig. 3: den Positioniermechanismus gemäß Fig. 2 mit herangezogenem Werkstück.

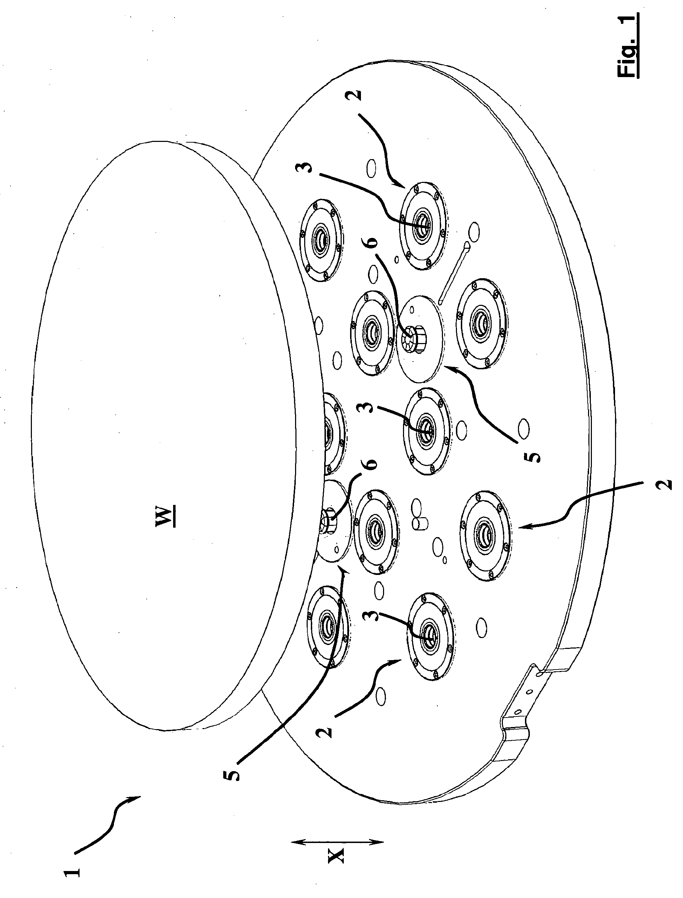

Fig. 1 zeigt eine im Wesentlichen kreisrunde Grundplatte, die um eine Rotationsachse X ausgebildet ist und mehrere Spanntöpfe 2 aufweist. Jeder Spanntopf 2 weist eine Einzugsöffnung 3 auf, in die jeweils ein Fixierelement (insbesondere ein bekannter Spannbolzen, in den Figuren nicht dargestellt) zur Verspannung bzw. Fixierung einführbar ist, wobei das Fixierelement seinerseits an einem Werkstück W befestigt ist. Die Grundplatte dient der Befestigung von Werkstücken an einer Werkzeugmaschine und kann insbesondere durch die Werkzeugmaschine zur Rotation um ihre in X-Richtung verlaufende Rotationsachse angetrieben werden, beispielsweise um an dem an der Grundplatte befestigten Werkstück eine Drehbearbeitung durchzuführen. Hierzu kann die Grundplatte auch so ausgerichtet sein, dass ihre Rotationsachse horizontal verläuft.

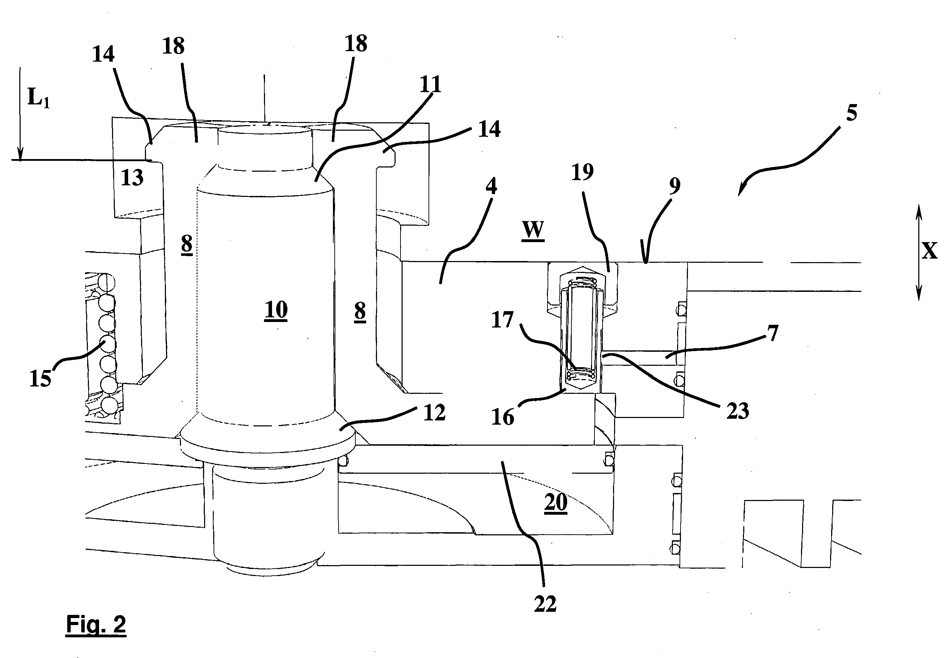

Neben insgesamt zehn aus dem Stand der Technik bekannten Spanntöpfen 2 verfügt die erfindungsgemäße Sicherungs-Spannvorrichtung 1 gemäß Fig. 2 auch über zwei Positioniermechanismen 5. Die Positioniermechanismen 5 liegen im Wesentlichen in der gleichen Ebene wie die Spanntöpfe 2. Jeder Positioniermechanismus 5 umfasst in seinem Zentrum bewegliche Mittel 6 in Form von Zugelementen 8, die in die Ausnehmung eines Werkstücks eingreifen können, um dieses im Rahmen einer groben Vorpositionierung so auszurichten, dass die am Werkstück W befestigten Spannbolzen in die Einzugsöffnungen 3 der Spanntöpfe 2 leicht eingeführt und schließlich dort verspannt werden können.

Fig. 2 zeigt eine schematische Schnittdarstellung eines Positioniermechanismus' 5. Der Positioniermechanismus 5 umfasst eine im Wesentlichen kreisscheibenförmige Anschlagplatte 4, deren obere Anschlagfläche 9 in der Grundplatte gemäß Fig. 1 in etwa bündig zur Oberseite der Spanntöpfe 2 angeordnet ist. Im Zentrum der Anschlagplatte 4 ragen mehrere Zugelemente 8 von der Anschlagplatte 4 in X-Richtung hervor. Die Zugelemente 8 sind in X-Richtung beweglich und um einen im Zentrum der Anschlagplatte 4 liegenden Dorn 10 angeordnet. Der Dorn 10 weist zwei als konische Erweiterungen geformte Absätze 11, 12 auf, die mit dazu komplementär ausgebildeten Schrägen auf der zum Dorn 10 gewandten Seite jedes Zugelements 8 zusammenwirken. In ihrer vollständig ausgefahrenen Position nehmen die Zugelemente in Bezug auf ihre X-Position eine erste Endlage L₁ ein.

Ein Federmechanismus 15 drückt die nach oben aus der Anschlagplatte 4 herausragenden freien Enden 18 jedes Zugelements 8 nach unten in Richtung auf die Anschlagplatte 4. Dabei bewegen sich an den freien Enden 18 der Zugelemente 8 ausgebildete Haken 14 einerseits aus der ersten Endlage L₁ heraus in X-Richtung abwärts, andererseits erfahren die Zugelemente 8 aufgrund der konischen Vorsprünge 11 und 12 eine translatorische Verschiebung mit radialem Anteil quer zur X-Richtung nach außen. Im Rahmen dieser radialen Bewegung hintergreifen die Haken 14 eine in einer Ausnehmung 13 eines Werkstücks W ausgebildete Hinterschneidung, so dass die Zugelemente 8 eine Zugkraft in X-Richtung auf die Anschlagplatte 4 auf das Werkstück W ausüben können.

Während sich die Zugelemente 8 in X-Richtung abwärts bewegen, gleiten sie mit ihren komplementär dazu ausgebildeten Flächen an den konischen Absätzen 11, 12 des Dorns 10 entlang, wodurch die gleichzeitige radiale Bewegung der Zugelemente 8 bewirkt wird. Sobald die konischen Absätze 11, 12 und die dazu komplementären Abschnitte an den Zugelementen 8 vollständig aneinander vorbeigeglitten sind, erfolgt die weitere Abwärtsbewegung der Zugelemente 8 ausschließlich in X-Richtung. Zu diesem Zeitpunkt haben die Haken 14 die Hinterschneidung in der Ausnehmung 13 des Werkstücks W bereits ausreichend weit hintergriffen, um das Werkstück in X-Richtung zu beaufschlagen und möglichst bis in die Fixierlage herabzuziehen.

Die in Fig. 2 dargestellte Position der Zugelemente bzw. des Werkstücks macht deutlich, dass das Werkstück in seiner Bewegungsfreiheit in X-Richtung und auch quer dazu durch die Zugelemente 8 eingeschränkt ist und somit im Hinblick auf die zu erreichende feste Fixierung des Werkstücks an den Spanntöpfen 2 gemäß Fig. 1 bereits grob vorpositioniert ist.

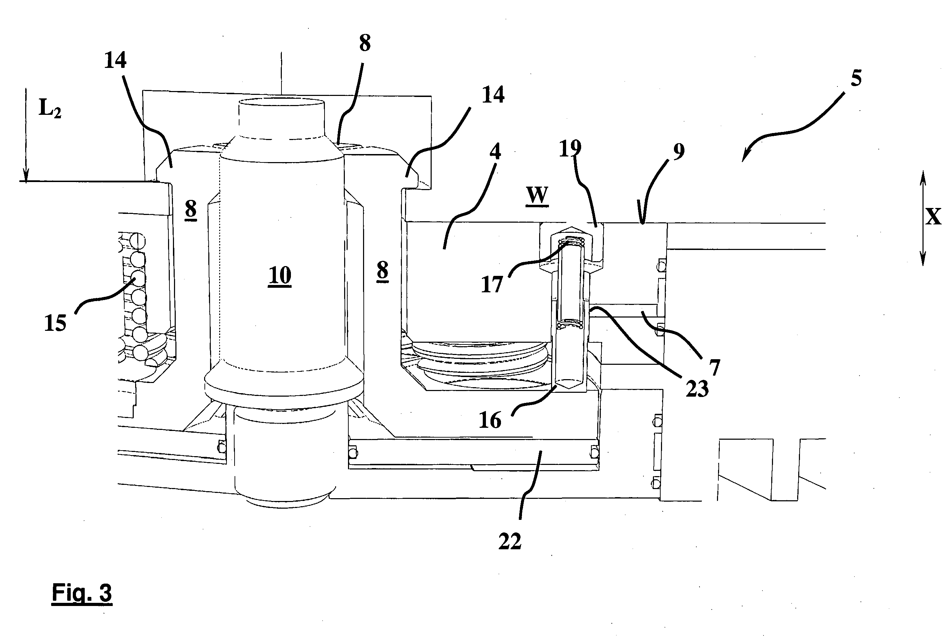

In Fig. 3 ist zu erkennen, dass die Zugelemente 8 auf ihrem weiteren Weg in X-Richtung eine Endlage L₂ eingenommen haben, in der das Werkstück W bis auf die Anschlagfläche 9 herabgezogen wurde und im Hinblick auf die Spanntöpfe 2 die Fixierlage einnimmt. In dieser Position ragen die nicht näher dargestellten Spannbolzen des Werkstücks W vollständig in die Spanntöpfe 2 der Grundplatte gemäß Fig. 1 hinein und können durch Betätigung der Spannmechanismen der Spanntöpfe darin für anschließende Bearbeitung lagegenau und sicher fixiert werden.

Der in Fig. 2 und 3 dargestellte Federmechanismus 15 zur Betätigung der Zugelemente 8 ist zweckmäßigerweise durch Druckluftbeaufschlagung betätigbar. Ein von einem Kolben 22 verschlossener Hubraum 20 ist dazu mit Druckluft beaufschlagbar, wodurch die an dem Kolben 22 anliegenden Zugelemente 8 gegen die Federkraft in X-Richtung aus dem Positioniermechanismus herausfahrbar sind. Wird dagegen der Hubraum 20 entspannt, so drücken die Federn die Zugelemente 8 in entgegengesetzter Richtung wieder abwärts, wobei ein von den Haken 14 der Zugelemente 8 erfasstes Werkstück W mit angezogen wird. Durch diesen Mechanismus ist vorteilhaft sichergestellt, dass die Zugelemente 8 das Werkstück W immer dann festhalten, wenn der Hubraum 20 nicht mit Druckluft beaufschlagt oder diese eventuell ungewollt ausgefallen ist.

In der Anschlagplatte 4 ist eine Bohrung vorgesehen, in der ein Stift 16 in X-Richtung verschieblich geführt wird. Eine in das Innere des Stiftes 16 hineinragende Spiralfeder 17 stützt sich dabei über eine Verschlusskappe 19 an der Anschlagplatte 4 ab und drückt dabei den Stift 16 abwärts. Mit seinem nach unten ragenden freien Ende liegt der Stift 16 an einer flanschförmigen Erweiterung eines Zugelements 8 an, so dass der Stift 16 den Bewegungen des Zugelements 8 in X-Richtung folgt.

Bei der in Fig. 2 dargestellten Anordnung nehmen die Zugelemente 8 die erste Endlage L₁ ein, wodurch der Stift 16 vollständig in seine ihn führende Bohrung innerhalb der Anschlagplatte 4 eingeschoben wird. Diese Position des Stifts 16 repräsentiert den Zustand, in dem das Werkstück W nicht zwingend durch die Zugelemente 8 gegen die Anschlagplatte 4 verspannt bzw. gesichert gehalten wird. In dem in Fig. 3 dargestellten Zustand dagegen, in dem die Zugelemente 8 die zweite Endlage L₂ einnehmen, ragt der Stift 16 um ein Maß aus seiner Führungsbohrung nach unten heraus. Diese Position repräsentiert den Zustand, in dem das Werkstück W von den Zugelementen 8 sicher in der Fixierlage gegen die Anschlagplatte 4 verspannt ist.

Der Stift 16 weist entlang seiner Längsachse zwei Bereiche mit unterschiedlichem Außendurchmessern auf. In seinem unteren Bereich ist der Durchmesser des Stifts 16 gegenüber dem oberen Bereich geringfügig reduziert, was zu einem Ringspalt zwischen dem Stift 16 und seiner Bohrung in diesem Bereich führt. Der darüber liegende zweite Abschnitt des Stiftes 16 hat einen Außendurchmesser, der weitgehend dem Innendurchmesser der den Stift führenden Bohrung entspricht, so dass der Stift leicht, aber ohne nennenswertes Spiel innerhalb der Bohrung verschiebbar ist.

Eine Zuführung 7 mündet an der Öffnung 23 radial in die den Stift 16 führende Bohrung. Ein Fluid, insbesondere Druckluft, kann durch eine im Weiteren nicht dargestellte Leitung dieser Zuführung 7 zugeleitet werden, um eine Strömung durch die Zuführung 7 zu detektieren und gegebenenfalls als Abschaltkriterium für die Werkzeugmaschine zu verarbeiten. In der in Fig. 2 dargestellten Position, in der das Werkstück W nicht fest gegen die Anschlagplatte 4 verspannt ist, liegt der Stift 16 in X-Richtung derart, dass der Abschnitt mit geringerem Außendurchmesser bzw. der Ringraum mit der Mündung der Zuführung 7 kommuniziert, die Öffnung 23 also nicht verschlossen ist. Ein der Zuführung 7 extern zugeführtes Medium kann daher in den Ringraum einströmen und durch eine nicht näher dargestellte Abführung abströmen. Da der Stift 16 in dieser Position also die Strömung des Fluids nicht blockiert, kann die detektierte Strömung als Signal dafür ausgewertet werden, dass die Zugelemente 8 das Werkstück W nicht sicher gegen die Anschlagplatte 4 verspannen.

In Fig. 3 dagegen ist das Werkstück W durch die vollständig in die zweite Endlage L₂ herabgezogenen Zugelemente 8 fest gegen die Anschlagplatte 4 verspannt. Entsprechend ist der Stift 16 den Abwärtsbewegungen der Zugelemente 8 gefolgt, so dass nun der Abschnitt mit erweitertem Außendurchmesser des Stiftes 16 die Öffnung 23 an der Mündung der Zuführung 7 abdeckt bzw. verschließt. Entsprechend kann ein der Zuführung 7 extern zugeführtes Medium nicht mehr in die Bohrung ausströmen. Dieser Umstand kann durch die zuvor beschriebene Auswerte- bzw. Steuereinheit als Hinweis darauf verarbeitet werden, dass das Werkstück W sicher gegen den Positioniermechanismus 5 verspannt ist.

Alternativ hätte die Zuführung 7 auch so gestaltet werden können, dass ihre Mündung unmittelbar vom Werkstück W verschlossen werden kann. In diesem Fall tritt eine Luftströmung aber erst dann auf, wenn das Werkstück tatsächlich die Zuführung 7 freigegeben hat, sich also relativ zum Positioniermechanismus 5 bewegt hat. In der Ausführungsform gemäß den Figuren 2 und 3 dagegen wird die Zuführung 7 in Abhängigkeit der Position der Zugelemente 8 geöffnet bzw. versperrt, so dass bereits ein mögliches Loslösen des Werkstücks W rechtzeitig erkannt werden kann.

Der erfindungsgemäße Positioniermechanismus funktioniert folgendermaßen:
Durch Beaufschlagung des Kolbens 22 mit Druckluft gegen den Federmechanismus 15 werden die Zugelemente 8 von der Anschlagplatte 4 fort in X-Richtung nach oben herausgefahren. Sie gleiten dabei am Dorn 10 entlang und nehmen schließlich eine radial eng beieinander liegende Position in der ersten Endlage L₁ ein. Ein Werkstück W mit darin vorgesehener Ausnehmung 13 wird zum Zweck der groben Vorabpositionierung so über die Zugelemente 8 gestülpt, dass eine Bewegung des Werkstücks W quer zur X-Richtung durch die Zugelemente 8 auf ein geringes Maß begrenzt wird.

Anschließend wird der Hubraum 20 entlastet, so dass sich die Federn 15 entspannen und dabei die Zugelemente 8 in entgegengesetzter Richtung am Dorn 10 entlang herab bewegen. Dabei spreizen sich die Zugelemente 8 durch Bewegung entlang der konischen Abschnitte 11 und 12 des Doms 10 in radialer Richtung auf, wobei die Haken 14 der Zugelemente 8 eine Hinterschneidung in der Ausnehmung 13 des Werkstücks hintergreifen. Bei weiterer Abwärtsbewegung der Zugelemente 8 wird das Werkstück W selbsttätig in Richtung auf die Anschlagfläche 9 bis in die Fixierlage eingeschoben (in der die Spannbolzen in die Spanntöpfe 2 der Grundplatte gemäß Fig. 1 hineinragen). Mit Erreichen der Endlage L₂ liegt das Werkstück W an der Anschlagfläche 9 des Positioniermechanismus 5 an und kann gleichzeitig über seine Spannbolzen in den Spanntöpfen 2 gemäß Fig. 1 fixiert werden.

Sollte sich das Werkstück 10 unbeabsichtigt aus der in Fig. 3 dargestellten Position lösen, so gibt der Stift 16 die Mündung der Zuführung 7 frei, wodurch Druckluft aus der Öffnung 23 ausströmen kann. Diese Strömung kann durch die vorgenannte Überwachung zur sofortigen Abschaltung der Werkzeugmaschine (insbesondere Beendigung der Drehbewegung der Grundplatte) verwendet werden, um die Maschine in einen sicheren Betriebszustand zu bringen und um eine Gefährdung von Mensch und Maschine durch unkontrolliert fortgeschleuderte Werkstücke zu verhindern.

Ein vergleichbarer Sicherungsmechanismus kann erfindungsgemäß auch an den Spanntöpfen vorgesehen sein kann. Aus einer in den Spanntopf führenden Zuführung 70 kann dann ebenfalls Fluid ausströmen, wenn sich das Werkstück unbeabsichtigt lösen sollte, was ebenfalls zu einer Abschaltung der Werkzeugmaschine führen soll. Vorteilhafterweise können beide Sicherungsmechanismen miteinander gekoppelt werden. Die Drucküberwachung mittels Sensoren kann dann erfindungsgemäß in einem mit beiden Zuführungen kommunizierenden (gemeinsamen) Leitungsabschnitt vorgesehen sein, so dass ein unerwünschter Druckabfall in einer von beiden oder auch in beiden Zuführungen gleichzeitig durch die gemeinsame Sensorik erfasst und ausgewertet werden kann.

Durch die erfindungsgemäße Sicherungs-Spannvorrichtung vereinfacht sich einerseits die Befestigung von Werkstücken an Werkzeugmaschinen, während andererseits das unerwünschte Loslösen von Werkstücken besonders sicher erkannt werden kann, indem die Zugelemente zugleich das Werkstück einspannen und Einfluss auf die Luftströmung nehmen.

## Patentansprüche

1. Sicherungs-Spannvorrichtung (1) zum temporären Einspannen von Werkstücken (W),
a) mit wenigstens einem Spanntopf (2) zur positionsgenauen Fixierung des Werkstücks (W),
b) wobei der Spanntopf (2) eine Einzugsöffnung (3) zur Aufnahme eines mit dem Werkstück (W) verbundenen Fixierelements (4) aufweist, und wobei sich die Einzugsöffnung (3) längs einer ersten, vorzugsweise horizontalen Richtung (X) erstreckt,
c) wobei die Sicherungs-Spannvorrichtung (1) zusätzlich zum wenigstens einen Spanntopf (2) wenigstens einen mit dem Werkstück (W) zusammenwirkenden und bewegliche Mittel (6) umfassenden Positioniermechanismus (5) aufweist, um das Werkstück (W), bevor es durch den Spanntopf (2) positionsgenau fixiert wird, zunächst in seiner Bewegungsfreiheit in X-Richtung und/oder quer dazu jeweils auf einen Bereich zu limitieren,
**dadurch gekennzeichnet,**
d) dass die Mittel (6) in X-Richtung bewegbar sind, um das von den Mitteln (6) beaufschlagte Werkstück (W) relativ zum Spanntopf (2) aktiv auf diesen hin zu bewegen.

2. Sicherungs-Spannvorrichtung nach Anspruch 1, **dadurch gekennzeichnet, dass** die beweglichen Mittel (6) wenigstens ein Zugelement (8) mit einem Haken umfassen, um damit eine in einer Ausnehmung des Werkstücks vorgesehene Hinterschneidung hintergreifen zu können, um das Werkstück in X-Richtung mit einer Zugkraft beaufschlagen zu können.

3. Sicherungs-Spannvorrichtung nach einem der vorigen Ansprüche, **dadurch gekennzeichnet, dass** die Mittel (6) wenigstens ein Zugelement (8) umfassen, wobei das Zugelement (8) aus einer ersten Lage (L₁), in der das Werkstück (W) in X-Richtung frei beweglich ist, in eine zweite Lage (L₂) verfahrbar ist, in der die Bewegungsfreiheit des Werkstücks (W) in X-Richtung auf ein vorgebbares Maß, insbesondere auf den Wert 0, limitiert ist.

4. Sicherungs-Spannvorrichtung nach dem vorhergehenden Anspruch, **dadurch gekennzeichnet, dass** die Mittel so gewählt sind, dass sie die Bewegungsfreiheit des Werkstücks (W) quer zur X-Richtung in der ersten und der zweiten Lage (L₁, L₂) des Zugelements (8) limitieren.

5. Sicherungs-Spannvorrichtung nach einem der vorigen Ansprüche, **dadurch gekennzeichnet, dass** eine Zuführung (7) für ein Fluid an einer Öffnung (23) am Positioniermechanismus (5) mündet, wobei die Öffnung (23) durch das Werkstück (W), die beweglichen Mittel (6) oder ein damit gekoppeltes Verschlusselement (16), insbesondere durch Bewegung des Werkstücks (W) in X-Richtung auf den Spanntopf (2) zu, verschließbar ist.

6. Sicherungs-Spannvorrichtung nach dem vorhergehenden Anspruch, **dadurch gekennzeichnet, dass** auch am Spanntopf (2) eine Zuführung (70) für ein Fluid in einer Öffnung mündet, die durch das Werkstück (W) oder ein damit gekoppeltes Absperrelement, insbesondere durch Bewegung des Werkstücks (W) in X-Richtung auf den Spanntopf (2) zu, verschließbar ist.

7. Sicherungs-Spannvorrichtung nach dem vorhergehenden Anspruch, **dadurch gekennzeichnet, dass** beide Zuführungen (7, 70) so miteinander kommunizieren, dass sie gleichzeitig mit Fluid beaufschlagbar sind.

8. Werkzeugmaschine zur Aufnahme einer Sicherungs-Spannvorrichtung nach einem der vorigen Ansprüche 4 bis 6, **dadurch gekennzeichnet, dass** eine Steuereinheit zur Überwachung eines unbeabsichtigten Öffnens wenigstens einer der beiden Öffnungen vorgesehen ist, um die Maschine dann in einen sicheren Betriebszustand zu überführen.

9. Werkzeugmaschine nach dem vorhergehenden Anspruch, **dadurch gekennzeichnet, dass** zur Überwachung der Öffnungen wenigstens ein Drucksensor in der Zuführung (7, 70) oder in einer beide Leitungen gemeinsam versorgenden Zuleitung vorgesehen ist.

## Claims

1. A safety clamping device (1) for temporarily clamping workpieces (W),
a) having at least one clamping chuck (2) for fixing the workpiece (W) in an exact position,
b) wherein the clamping chuck (2) has an introduction opening (3) to receive a fixing element (4) which is connected to the workpiece (W), and wherein the introduction opening (3) extends along a first, preferably horizontal direction (X),
c) wherein the safety clamping device (1) has in addition to the at least one clamping chuck (2) at least one positioning mechanism (5), which cooperates with the workpiece (W) and comprises movable means (6), in order to limit the workpiece (W), before it is fixed in an exact position by the clamping chuck (2), firstly in its freedom of movement in the X-direction and/or transversely thereto in each case to one region,
**characterised in that**
d) the means (6) are movable in the X-direction in order to move the workpiece (W), upon which the means (6) act, relative to the clamping chuck (2) actively towards the latter.

2. A safety clamping device according to claim 1, **characterised in that** the movable means (6) comprise at least one pulling element (8) with a hook in order to be able to engage therewith behind an undercut provided in a recess of the workpiece in order to be able to act upon the workpiece in the X-direction with a tractive force.

3. A safety clamping device according to one of the previous claims, **characterised in that** the means (6) comprise at least one pulling element (8), wherein the pulling element (8) can be moved out of a first position (L₁), in which the workpiece (W) is freely movable in the X-direction, into a second position (L₂), in which the freedom of movement of the workpiece (W) is limited in the X-direction to a predeterminable measure, in particular to the value 0.

4. A safety clamping device according to the preceding claim, **characterised in** the means are selected in such a way that they limit the freedom of movement of the workpiece (W) transversely to the X-direction in the first and the second position (L₁, L₂) of the pulling element (8).

5. A safety clamping device according to one of the previous claims, **characterised in that** a supply line (7) for a fluid runs into an opening (23) at the positioning mechanism (5), wherein the opening (23) can be closed by means of the workpiece (W), the movable means (6) or a closure element (16) coupled therewith, in particular by means of movement of the workpiece (W) in the X-direction towards the clamping chuck (2).

6. A safety clamping device according to the preceding claim, **characterised in that** also at the clamping chuck (2) a supply line (70) for a fluid runs into an opening which can be closed by the workpiece (W) or a shut-off element coupled therewith, in particular by means of movement of the workpiece (W) in the X-direction towards the clamping chuck (2).

7. A safety clamping device according to the preceding claim, **characterised in that** both supply lines (7, 70) communicate with each other in such a way that fluid can act upon them simultaneously.

8. A machine tool to receive a safety clamping device according to one of the previous claims 4 to 6, **characterised in that** a control unit is provided to monitor unintentional opening of at least one of the two openings in order then to transfer the machine into a safe operating state.

9. A machine tool according to the preceding claim, **characterised in that** to monitor the openings there is provided at least one pressure sensor in the supply line (7, 70) or in a feed line supplying both lines jointly.

## Revendications

1. Dispositif de serrage de sécurité (1) pour le serrage temporaire de pièces (W),
a) avec au moins un pot de serrage (2) pour la fixation avec un positionnement précis de la pièce (W),
b) le pot de serrage (2) comprenant une ouverture d'entrée (3) pour le logement d'un élément de fixation (4) relié avec la pièce (W) et l'ouverture d'entrée (3) s'étendant le long d'une direction (X), de préférence horizontale,
c) le dispositif de serrage de sécurité (1) comprenant, en plus de l'au moins un pot de serrage (2), au moins un mécanisme de positionnement (5) interagissant avec la pièce (W) et comprenant des moyens mobiles (6), afin que la pièce (W) soit limitée dans la liberté de mouvement dans la direction X et/ou transversalement par rapport à celle-ci à une certaine zone, avant qu'elle soit fixée avec un positionnement précis par le pot de serrage (2),
**caractérisé en ce que**
d) les moyens (6) sont mobiles dans la direction X afin de déplacer la pièce (W) sollicitée par les moyens (6) par rapport au pot de serrage (2) de manière active vers celui-ci.

2. Dispositif de serrage de sécurité selon la revendication 1, **caractérisé en ce que** les moyens mobiles (6) comprennent au moins un élément de traction (8) avec un crochet, afin de pour pouvoir saisir, avec celui-ci une contre-dépouille prévue dans un évidement de la pièce afin de pouvoir solliciter la pièce dans la direction X avec une force de traction.

3. Dispositif de serrage de sécurité selon l'une des revendications précédentes, **caractérisé en ce que** les moyens (6) comprennent au moins un élément de traction (8), l'élément de traction (8) pouvant être déplacé d'une première position (L₁), dans laquelle la pièce (W) est mobile librement dans la direction X, vers une deuxième position (L₂), dans laquelle la liberté de mouvement de la pièce (W) dans la direction X est limitée dans une mesure pouvant être prédéterminée, plus particulièrement à la valeur 0.

4. Dispositif de serrage de sécurité selon la revendication précédente, **caractérisé en ce que** les moyens sont choisis de façon à ce qu'ils limitent la liberté de mouvement de la pièce (W) transversalement par rapport à la direction X dans la première et la deuxième position (L₁, L₂) de l'élément de traction (8).

5. Dispositif de serrage de sécurité selon l'une des revendications précédentes, **caractérisé en ce qu'**une alimentation (7) pour un fluide débouche au niveau d'une ouverture (23) sur le mécanisme de positionnement (5), l'ouverture (23) pouvant être obturée par la pièce (W), les moyens mobiles (6) ou un élément d'obturation (16) couplé avec ceux-ci, plus particulièrement par le mouvement de la pièce (W) dans la direction X sur le pot de serrage (2).

6. Dispositif de serrage de sécurité selon la revendication précédente, **caractérisé en ce que**, au niveau du pot de serrage (2), une alimentation (70) pour un fluide débouche dans une ouverture qui peut être obturée par la pièce (W) ou un élément d'arrêt couplé avec celui-ci, plus particulièrement par le mouvement de la pièce (W) dans la direction X sur le pot de serrage (2).

7. Dispositif de serrage de sécurité selon la revendication précédente, **caractérisé en ce que** les deux alimentations (7, 70) communiquent entre elles de façon à ce qu'elles puissent être alimentées simultanément en fluide.

8. Machine-outil comportant un dispositif de serrage de sécurité selon l'une des revendications 4 à 6, **caractérisée en ce qu'**une unité de commande est prévue pour la surveillance d'une ouverture par inadvertance d'au moins une des deux ouvertures afin de mettre ensuite la machine dans un état de fonctionnement sûr.

9. Machine-outil selon la revendication précédente, **caractérisée en ce que**, pour la surveillance des ouvertures, au moins un capteur de pression est prévu dans l'alimentation (7, 70) ou dans une conduite d'alimentation alimentant conjointement les deux conduites.
